# EUROPÄISCHE PATENTSCHRIFT

(11) **EP 1 320 472 B1**
(45) Veröffentlichungstag und Bekanntmachung des Hinweises auf die Patenterteilung: **09.08.2006**
(21) Anmeldenummer: 01976036.2
(22) Anmeldetag: 20.09.2001
(51) Int. Cl.: B60K 6/04

(54) **ANTRIEBSSTRANGSTEUERUNG FÜR EIN KRAFTFAHRZEUG MIT MINDESTENS ZWEI ANTRIEBSAGGREGATEN UND EINEM GETRIEBE**
DRIVETRAIN CONTROLLER FOR A MOTOR VEHICLE WITH AT LEAST TWO POWER UNITS AND A GEARBOX
COMMANDE DE TRANSMISSION POUR UN VEHICULE AUTOMOBILE COMPRENANT AU MOINS DEUX MECANISMES D'ENTRAINEMENT ET UNE BOITE DE VITESSE

(30) Priorität: 27.09.2000 DE 10047906
(43) Veröffentlichungstag der Anmeldung: 25.06.2003
(73) Patentinhaber: SIEMENS AKTIENGESELLSCHAFT, 80333 München (DE)
(72) Erfinder: PROBST, Gregor, 84028 Landshut (DE); GUTKNECHT-STÖHR, Florian, 93047 Regensburg (DE); GRASSL, Georg, 93138 Hainsacker (DE); RAMPELTSHAMMER, Martin, 81369 München (DE)
(86) Internationale Anmeldenummer: PCT/DE2001/003644
(87) Internationale Veröffentlichungsnummer: WO 2002/026520

(56) Entgegenhaltungen:
- DE-A- 19 637 210
- DE-A- 19 704 153
- GB-A- 2 340 463

## Beschreibung

Die Erfindung betrifft eine Antriebsstrangsteuerung gemäß dem Oberbegriff des Patentanspruchs 1.

Zukünftige Fahrzeuggenerationen werden neben einer herkömmlichen Brennkraftmaschine zunehmend mit mindestens einem zusätzlichen Antriebsaggregat, wie einem Elektromotor, ausgerüstet sein. Der Begriff Elektromotor ist hierbei und im folgenden allgemein zu verstehen und schließt auch Kurbelwellen-Startergeneratoren - im folgenden auch als integrierte Startergeneratoren (ISG) bezeichnet - ein.

Aus der DE 196 37 210 A1 ist eine Antriebsstrangsteuerüng für ein Kraftfahrzeug bekannt, durch die die Art der Antriebsquelle abhängig von den Stellungen des Fahrpedals und des Bremspedals sowie von Sensorsignalen und Betriebsparametern des Kraftfahrzeugs festgelegt wird.

Der Erfindung liegt die Aufgabe zugrunde, eine Antriebsstrangsteuerung für ein Kraftfahrzeug mit mindestens zwei Antriebsaggregaten und einem Getriebe zu schaffen, durch die der Betrieb des Kraftfahrzeugs bezüglich Kraftstoffverbrauch, Schadstoffemissionen, Fahrbarkeit und Fahrleistung verbessert wird.

Diese Aufgabe wird erfindungsgemäß durch eine Antriebsstrangssteuerung mit den Merkmalen des Patentanspruchs 1 gelöst. Weitere vorteilhafte Ausgestaltungen der Erfindung ergeben sich aus den Unteransprüchen.

Abhängig von einem Drehmoment-Sollwert und von Signalen, die die aktuelle Betriebssituation des Fahrzeugs charakterisieren, wird in einem Zustandsmanager ein Soll-Betriebszustahd des Antriebsstrangs festgelegt. In einem Drehmomentmanager werden anschließend abhängig von dem Drehmoment-Sollwert und vom Soll-Betriebszustand Steuersignale für dezentrale Steuereinheiten der Antriebsaggregate und des Getriebes erzeugt.

Eine derartige hierarchische Trennung der Festlegung des Soll-Betriebszustandes und der Verteilung der Drehmomentanforderung an die vorhandenen Momentenquellen und -senken verringert die Systemkomplexität erheblich. Dadurch ist die Antriebsstrangsteuerung auch einfach konfigurierbar und somit an unterschiedliche Rahmenbedingungen und Anforderungen mit geringen Aufwand anzupassen. Außerdem ist es möglich, dem Zustandsmanager und dem Drehmomentmanager unterschiedliche Zeitscheiben zur Abarbeitung zuzuweisen und auf diese Weise die Regelungsdynamik zu erhöhen und die Prozessorauslastung gezielt zu beeinflussen.

Ein Ausführungsbeispiel der Erfindung wird im folgenden anhand der Zeichnungen erläutert. Es zeigen:
- Figur 1: einen Antriebsstrang eines Kraftfahrzeugs mit zwei Antriebsaggregaten,
- Figur 2: ein Blockschaltbild einer erfindungsgemäßen Antriebsstrangsteuerung,
- Figur 3: eine schematische Darstellung der möglichen Zustände des Antriebsstranges nach Figur 1 und
- Figur 4: einen Verlauf des Drehmoments eines Verbrennungsmotors mit und ohne integriertem Startergenerator.

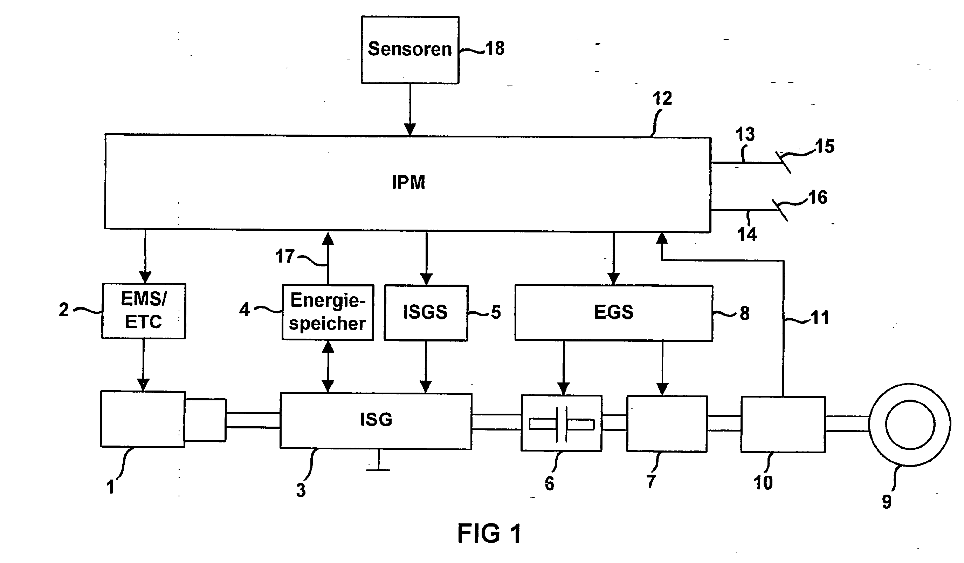

Die in Figur 1 dargestellte Anordnung zeigt einen Antriebsstrang eines Kraftfahrzeuges, der von einer Brennkraftmaschine 1 angetrieben wird, wobei die Brennkraftmaschine 1 herkömmlich aufgebaut ist und deshalb nur schematisch dargestellt wird. Die Brennkraftmaschine 1 wird dabei durch eine elektronische Motorsteuerung (EMS) 2 gesteuert, die auch die Funktion einer elektronischen Drosselklappenregelung (ETC) übernehmen kann. Ausgangsseitig ist die Brennkraftmaschine 1 über eine Welle mit einem Elektromotor in Form eines integrierten Startergenerators 3 verbunden, der einen Energiespeicher 4 auflädt. Der Energiespeicher 4 ist dabei vorteilhaft als elektrische Batterie ausgebildet, kann aber ebenso als Brennstoffzelle oder als Hochleistungs-Kondensator in Form von Ultra-Caps ausgebildet sein. Bei stillstehendem Motor kann der integrierte Startergenerator 3 dagegen zum Anlassen der Brennkraftmaschine 1 verwendet werden. Der integrierte Startergenerator ist dabei vorzugsweise als Asynchronmaschine ausgebildet, kann aber auch als Synchronmaschine oder Gleichstrommotor ausgebildet sein. Gesteuert wird der integrierte Startergenerator 3 durch eine ISG-Steuereinheit (ISGS) 5.

Vorteilhaft kann zwischen der Brennkraftmaschine 1 und dem integrierten Startergenerator 3 eine nicht dargestellte Kupplung angeordnet sein, die es ermöglicht, die Brennkraftmaschine 1 von dem Antriebsstrang abzutrennen. Dies ermöglicht eine Entkopplung der Drehzahl des integrierten Startergenerators 3 von der der Brennkraftmaschine 1, wodurch die nur Verlustenergie erzeugende Bremswirkung der Brennkraftmaschine 1 ausgeschaltet wird und die elektrisch nutzbare Bremswirkung des Startergenerators 3 verbessert wird.

Weiterhin ist in dem Antriebsstrang eine Kupplung 6 für ein Getriebe 7 angeordnet, wobei die Kupplung 6 beispielsweise als Nass- oder Trockenkupplung ausgeführt sein kann. Die Kupplung 6 und das Getriebe 7 werden von einer elektronischen Getriebesteuerung (EGS) 8 angesteuert, wobei die elektronische Getriebesteuerung 8 verschiedene Übersetzungsverhältnisse ü des Getriebes 7 einstellen kann. Die Umschaltung zwischen den verschiedenen Übersetzungsverhältnissen erfolgt hierbei durch die elektronische Getriebesteuerung (EGS) 8 automatisch durch eine entsprechende Ansteuerung der Kupplung 6 und der Aktuatoren des Getriebes 7, z.B. für die Gassen- und Gangstellungen bei Ausführung,des Getriebes 7 als automatisiertes Handschaltgetriebe. Alternativ zu einem Getriebe mit festen Gangstufen kann auch ein Getriebe mit kontinuierlich einstellbarem Übersetzungsverhältnis verwendet werden. Ebenso ist es unwesentlich ob das Getriebe 7 als konventionelles Automatikgetriebe mit Planetenradsatz oder als automatisiertes (automatisches) Handschaltgetriebe ausgeführt ist.

Ferner ist der Antriebsstrang mit den Rädern 9 des Kraftfahrzeugs verbunden. Aus Gründen der Übersichtlichkeit ist in der Figur beispielhaft nur ein Rad 9 dargestellt. Schließlich ist in dem Antriebsstrang ein Drehzahlsensor 10 angeordnet, der laufend die aktuelle Drehzahl n der Getriebeausgangswelle oder ein vergleichbares Signal, wie Raddrehzahl oder Fahrzeuggeschwindigkeit, misst und über eine Leitung 11 an ein systemübergreifendes Antriebsstrangmanagement (IPM) 12 übermittelt. Als weitere Eingangssignale erhält das Antriebsstrangmanagement 12 unter anderem über Leitungen 13 und 14 Signale, die den Fahrerwunsch bezüglich eines Antriebsmoments bzw. eines Bremsmoments charakterisieren. Diese Signale können beispielsweise durch Auswertung der Stellungen des Fahrpedals 15 bzw. des Bremspedals 16 gewonnen werden. Des weiteren wird dem Antriebsstrangmanagement 12 über eine Leitung 17 ein Signal übermittelt, das den Ladezustand des Energiespeichers 4 charakterisiert. Außerdem werden dem Antriebsstrangmanagement 12 weitere Signale von symbolisch zu einem Block zusammengefassten Sensoren 18 und eventuell auch Daten aus externen Signalquellen, z. B. über GPS, zugeführt, die eine Ermittlung der aktuellen Betriebssituation ermöglichen.

Abhängig von den zugeführten Signalen führt das Antriebsstrangmanagement 12 eine koordinierte Berechnung der zentralen Betriebsparameter des Antriebsstrangs durch. So werden im Antriebsstrangmanagement 12 zum Beispiel Getriebeübersetzungen und Soll-Drehmomente für die Antriebsaggregate, aber auch Antriebsart und Betriebspunkte festgelegt. Diese Informationen werden den dezentralen Steuerungen oder Steuereinrichtungen 2, 5 und 8 in Form von Steuersignalen zugeführt. Die Steuerungen oder Steuereinrichtungen 2, 5 und 8 erzeugen abhängig von diesen Steuersignalen Stellsignale für die einzelnen Aggregate oder Bestandteile des Antriebsstrangs. Das Antriebsstrangmanagement 12 ist in der Figur als eigenständige Steuereinheit dargestellt, kann aber ebenso in eine oder mehrere der dezentralen Steuerungen oder Steuereinrichtungen 2, 5 oder 8 integriert sein. Ebenso sind auch die dezentralen Steuereinrichtungen 2, 5 und 8 als eigenständige Steuereinheiten dargestellt. Auch diese Einheiten können aber in beliebiger Art und Weise kombiniert in einem oder mehreren multifunktionalen Steuergeräten untergebracht werden.

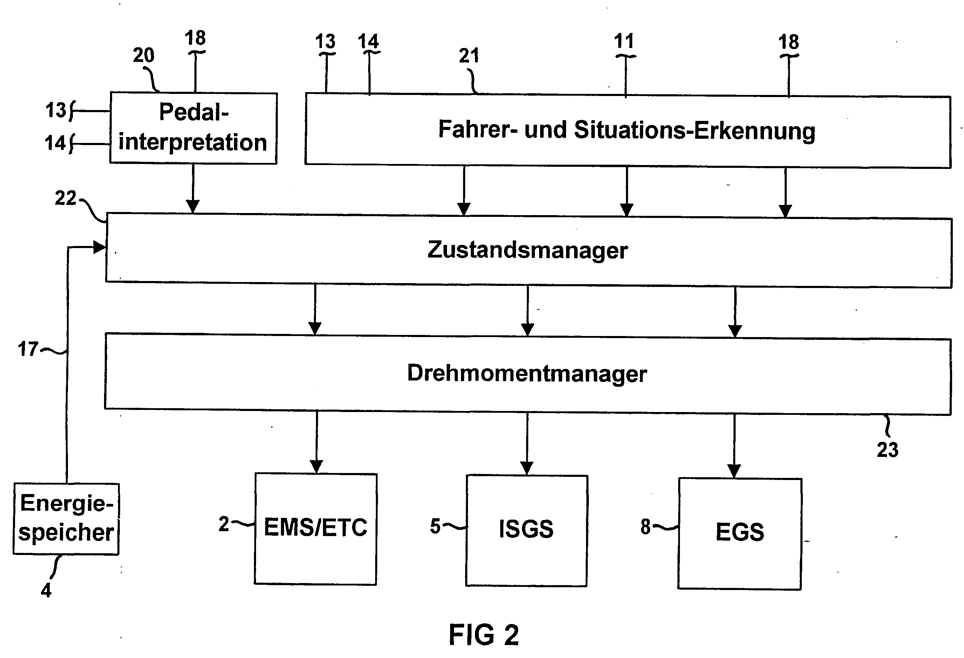

Die Architektur des Antriebsstrangmanagements 12 ist in Figur 2 detailliert dargestellt. In einer Pedalinterpretation 20 wird abhängig von den Signalen auf den Leitungen 13 und 14 ein Wunschdrehmoment ermittelt. Dieses Wunschdrehmoment wird vorteilhaft als Soll-Radmoment ausgegeben, kann aber auch als Soll-Radumfangskraft oder Soll-Drehmoment am Getriebeeingang oder -ausgang ausgegeben werden. Durch eine kontinuierliche Information über das Bremspedal 16 und weitere Signale der Sensoren 18 ist es auch möglich, negative Soll-Radmomente oder -Umfangskräfte vorzugeben. Somit ist ein integriertes Management von antreibenden Einheiten, wie Brennkraftmaschine oder Elektromotor, oder verzögernden, Energie aufnehmenden Einheiten, wie Betriebsbremse oder Stromgenerator, möglich. Alternativ zur Momentenwunschvorgabe vom Fahrer kann das Wunschdrehmoment auch von einem Fahrgeschwindigkeitsregler vorgeggben werden.

In einer Fahrer- und Situations-Erkennung 21 werden abhängig von den Signalen der Sensoren,18 und von der über die Leitung 11 zugeführten Drehzahl n sowie eventuell von weiteren Daten aus externen Signalquellen die Betriebssituation und den Fahrertyp charakterisierende Ausgangssignale erzeugt. Außerdem können auch die den Fahrerwunsch charakterisierenden Signale auf den Leitungen 13 und 14 berücksichtigt werden. Im einzelnen kann die Fahrer- und Situations-Erkennung folgende Bestandteile aufweisen: eine Fahrertyp-Ermittlung, eine Umwelt- und Strgssentyp-Lokalisation, eine Fahrmanöver- und Fahrsituationserkennung und einen Informationskanal, z. B. ein Funktelefon oder einen Satellitenempfänger.

Abhängig von den Ausgangssignalen der Fahrer- und Situations-Erkennung 21 und von dem über die Leitung 17 zugeführten Signal, das den Ladezustand des Energiespeichers 4 charakterisiert, wird in einem Zustandsmanager 22 der Soll-Betriebszustand des Antriebsstrangs festgelegt. Dieses Festlegen der Betriebszustände wird im weiteren Verlauf noch detailliert beschrieben. Vom Zustandsmanager 22 werden dann Steuersignale, z. B. in Form von Zustandsvariablen, die den Soll-Betriebszustand charakterisieren, an einen Drehmomentmanager 23 übermittelt.

Abhängig vom Soll-Betriebszustand wird das Wunschdrehmoment auf die vorhandenen Momentenquellen und -senken verteilt und die Übersetzung des Getriebes festgelegt. Die Verteilung des Wunschdrehmoments erfolgt dabei derart, dass vom Drehmomentmanager 23 an die dezentralen Steuereinheiten 2 und 5 ein Steuersignal, das das angeforderte Drehmoment des jeweiligen Antriebsaggregats charakterisiert, übermittelt wird. Analog wird an die Getriebesteuerung 8 ein Steuersignal übermittelt, das den einzulegenden Gang oder die einzustellende Getriebeübersetzung sowie gegebenenfalls den Öffnungsgrad der Kupplung 6 charakterisiert.

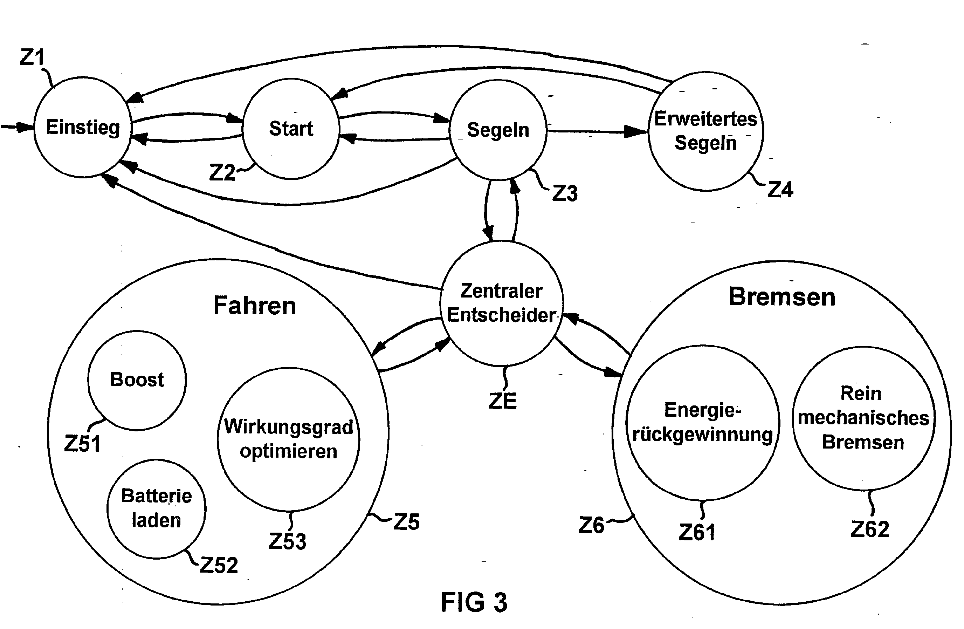

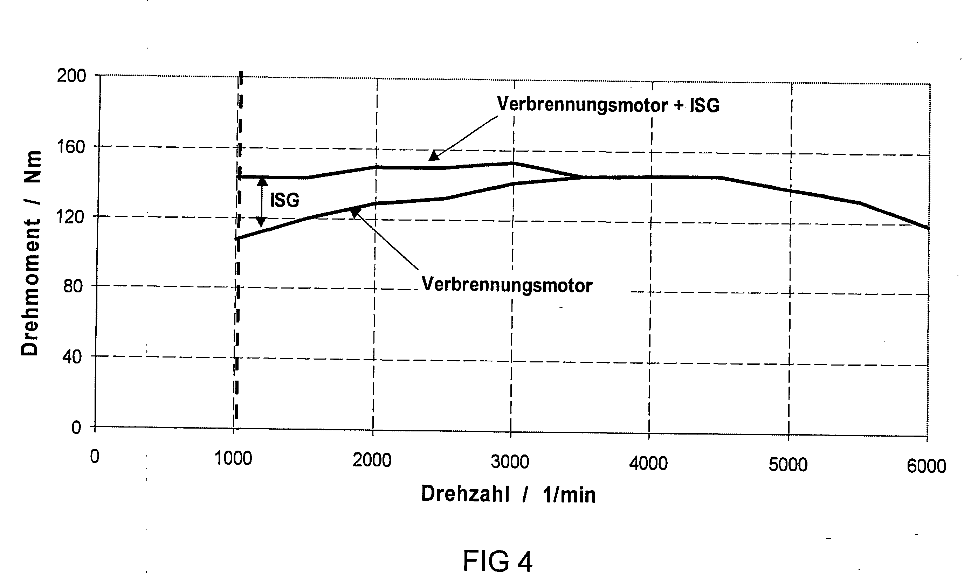

Im folgenden wird anhand eines Zustandsübergangsdiagramms (Figur 3) die Funktionalität des Zustandsmanagers 22 erläutert. Im Zustandsmanager 22 ist eine Vielzahl von möglichen Soll-Betriebszuständen eines Antriebsstrangs gespeichert. Die in einem speziellen Kraftfahrzeug real möglichen Betriebszustände und die möglichen , Zustandsübergänge sind dabei abhängig von der Konfiguration des Antriebsstrangs, das heißt von der Art und der Anzahl der vorhandenen Komponenten oder Aggregate in,diesem Kraftfahrzeug. Um einen erfindungsgemäßen Zustandsmanager 22 für unterschiedliche Fahrzeugtypen und somit für unterschiedlich konfigurierte Antriebsstränge nutzen zu können, ist im Zustandsmanager 22 vorteilhaft ein Konfigurationskenner, z.B. in Form von Datenbits, vorhanden, der abhängig von der Konfiguration des Antriebsstrangs gesetzt wird. Abhängig vom Konfigurationskenner können dann einzelne Zustände gesperrt oder freigegeben werden. Beispielhaft sind in Figur 3 mögliche Zustände und Zustandsübergänge für einen Antriebsstrang nach Figur 1 dargestellt. Dabei werden im Zustandsmanager 22 folgende Betriebszustände des Antriebsstrangs unterschieden:
- Z1:: Der Zustand "Einstieg" wird unmittelbar nach Einschalten der Zündung eingenommen.
- Z2:: Im Zustand "Start" wird der Verbrennungsmotor 1 über den integrierten Startergenerator 3 gestartet. Hierzu wird bei geöffneter Kupplung 6 vom Drehmomentmanager 23 eine Startdrehzahlanforderung an die ISG-Steuereinheit 5 übermittelt. Diese wiederum steuert den integrierten Startergenerator 3 derart, dass ein entsprechendes Drehmoment aufgebaut wird. Nach Überwinden des Losbrechmoments wird der Verbrennungsmotor 1 vom integrierten Startergenerator 3 bis zu einer Startdrehzahl beschleunigt. Abgeschlossen wird der Startvorgang schließlich durch eine Rückmeldung der Motorsteuerung 2 an das Antriebsstrangmanagement 12, dass die Leerlaufdrehzahl erreicht ist. Alternativ kann der Startvorgang auch über eine direkte Momentenvorgabe an den Startergenerator 3 gesteuert werden. Der Motorstart mit Hilfe des integrierten Startergenerators 3 ist wesentlich schneller und geräuschärmer als mit einem herkömmlichen Starter möglich.
- Z3:: Im Zustand "Segeln" wird oder bleibt die Kupplung 6 geöffnet und der Verbrennungsmotor 1 läuft im Leerlaufbetrieb weiter. Der "Segelbetrieb" weist insbesondere im Schubbetrieb einer Brennkraftmaschine mit konventionellem Antriebsstrang große Vorteile auf. Bei Schubbetrieb des Verbrennungsmotors 1 treten bei einem konventionellem Antriebsstrang durch das Reibmoment des Verbrennungsmotors 1 entsprechende Energieverluste auf, die zu höheren Drehzahlen hin ansteigen. Durch das Öffnen der Kupplung 6 im "Segelbetrieb" kann die aus der Verlustleistung der Brennkraftmaschine 1 resultierende Fahrzeugverzögerung vermieden werden. Sind weder das Fahrpedal 15 noch das Bremspedal 16 betätigt, wird daher der "Segelbetrieb" aktiviert und durch Betätigen des Fahrpedals 15 oder des Bremspedals 16 wieder verlassen.
- Z4:: Im Zustand "Erweitertes Segeln", der nur aus dem Zustand "Segeln" heraus erreicht werden kann, wird zusätzlich zum Öffnen der Kupplung 6 auch noch der Verbrennungsmotor 1 abgeschaltet. Dabei muss jedoch sicher gestellt werden, dass Sicherheitsaggregate, wie Bremskraftverstärker und Servolenkung, und Komfortaggregate, wie eine Klimaanlage, entweder elektrisch betrieben oder zumindest in ihrer Funktionsbereitschaft überwacht werden, damit der Verbrennungsmotor 1 im Bedarfsfall wieder rechtzeitig gestartet werden kann.
- Z5:: Der Zustand "Fahren" umfasst im Ausführungsbeispiel insgesamt drei Unterzustände, die das Fahren genauer beschreiben:
Z51: Im "Boost"-Zustand wird der integrierte Startergenerator 3 zur Unterstützung des Verbrennungsmotors 1 als Elektromotor betrieben und kann somit ein zusätzliches Drehmoment über die Kupplung 6 in das Getriebe 7 einleiten. Dabei ergänzen sich die Drehmomentcharakteristiken des Verbrennungsmotors 1 und des integrierten Startergenerators 3 im unteren Drehzahlbereich derart (Figur 4), dass sich verbesserte Durchzugswerte realisieren lassen. Andererseits wäre es aber auch möglich einen Verbrennungsmotor 1 mit kleinerem Hubraum einzusetzen, ohne an Durchzug bei niedrigen Drehzahlen einzubüßen.
Z52: Im Zustand "Batterie laden" wird der integrierte Startergenerator 3 als Generator betrieben und übernimmt die Funktion einer herkömmlichen Lichtmaschine, das heißt über ihn wird in diesem Zustand der Energiespeicher 4 geladen. Während einer aktiven Schaltung oder Änderung der Getriebeübersetzung kann dabei das Lastmoment auf 0 Nm reduziert werden, so dass der Schaltkomfort nicht beeinträchtigt wird.
Z53: Im Zustand "Wirkungsgrad optimieren" wird der Arbeitspunkt des Verbrennungsmotors 1 zur Verbesserung des Wirkungsgrades aktiv zu einem optimalen Betriebspunkt hin verschoben, das heißt abweichend vom ursprünglichen Wunschmoment des Fahrers wird der Verbrennungsmotor 1 mit höherem oder niedrigerem Mitteldruck bei besserem spezifischen Verbrauch betrieben. Bei einer Verschiebung z. B. zu höherem Verbrennungsmotormoment wird das überschüssige Drehmoment vom integrierten Startergenerator 3 aufgenommen, in Strom umgewandelt und in dem Energiespeicher 4 gespeichert. Die Amplitude der Arbeitspunktverschiebung wird dabei durch das maximale Drehmoment des integrierten Startergenerators 3 und die Dauer der Arbeitspunktverschiebung durch die Ladekapazität des Energiespeichers 4 begrenzt. Selbstverständlich sind dabei auch die Wirkungsgrade der einzelnen Komponenten zu berücksichtigen.
- Z6:: Auch der Zustand "Bremsen" umfasst im Ausführungsbeispiel zwei Unterzustände, die das Bremsen genauer charakterisieren:
Z61: Im Zustand "Energierückgewinnung" wird durch rekuperatives Bremsen über den integrierten Startergenerator 3 der Energiespeicher 4 geladen. Voraussetzung hierfür ist selbstverständlich, dass der verwendete Energiespeicher 4 rückspeisefähig ist und Ladung aufnehmen kann, das heißt nicht vollständig geladen ist. Ist zwischen der Brennkraftmaschine 1 und dem integrierten Startergenerator 3 eine in Figur 1 nicht dargestellte Kupplung angeordnet, die es ermöglicht, die Brennkraftmaschine 1 von dem Antriebsstrang abzutrennen, wird oder bleibt diese vorteilhaft geöffnet.
Z62: Im Zustand "Rein mechanisches Bremsen" wird auf Rekuperation verzichtet und somit keine Energie über den integrierten Startergenerator 3 rückgewonnen. Ist zwischen der Brennkraftmaschine 1 und dem integrierten Startergenerator 3 eine in Figur 1 nicht dargestellte Kupplung angeordnet, die es ermöglicht, die Brennkraftmaschine 1 von dem Antriebsstrang abzutrennen, wird oder bleibt diese vorteilhaft geschlossen.

Mögliche Zustandsübergänge sind in Figur 3 durch einen entsprechend gerichteten Pfeil dargestellt. Innerhalb der Hauptzustände "Fahren" und "Bremsen" wurde aus Gründen der Übersichtlichkeit auf entsprechende Pfeile verzichtet, es kann aber beliebig zwischen den jeweiligen Unterzuständen gewechselt werden. Jeder Zustandswechsel ist jedoch an die Erfüllung von vorgegebenen Übergangsbedingungen geknüpft. Ein Wechsel zwischen den Zuständen Z3 "Segeln" und den Hauptzuständen Z5 "Fahren" und Z6 "Bremsen" ist vorteilhaft nur über einen zentralen Entscheider ZE möglich und insbesondere abhängig von den den Fahrerwunsch charakterisierenden Signalen auf den Leitungen 13 und 14.

Wie bereits erwähnt, ist das Starten des Verbrennungsmotors 1 mit Hilfe eines integrierten Startergenerators 3 wesentlich schneller und geräuschärmer möglich als mit einem herkömmlichen Starter. Des Weiteren ist der Startvorgang für den integrierten Startergenerator 3 weitgehend verschleißfrei. Solange der Energiespeicher 4 ausreichende Energie für den nächsten Startvorgang zur Verfügung stellen kann, bietet es sich daher an, den Verbrennungsmotor 1 aus dem "Segelbetrieb" heraus, insbesondere in Haltephasen des Kraftfahrzeugs, abzuschalten. Um den Verbrennungsmotor 1 im Bedarfsfall aber wieder rechtzeitig zu starten, kommt dem Übergang vom "erweiterten Segelbetrieb" in den "Start"-Zustand eine hohe Bedeutung zu. Nachfolgend sind beispielhaft mögliche Übergangsbedingungen für einen Wechsel aus dem "erweiterten Segelbetrieb" in den "Start"-Zustand angegeben.

Der Soll-Betriebszustand des Antriebsstrangs wechselt von Zustand Z4 "Erweitertes Segeln" in den Zustand Z2 "Start" abhängig von
a) der Stellung des Fahrpedals 15:
   Wird dem Zustandsmanager 22 ein durch Betätigen des Fahrpedals 15 erzeugter positiver Momentenwunsch des Fahrers übermittelt, wechselt der Soll-Betriebszustand des Antriebsstrangs in den "Start"-Zustand.
b) der Stellung des Bremspedals 16:
   Wird das Bremspedal 16 nicht mehr betätigt, so dass kein negativer Momentenwunsch des Fahrers mehr vorliegt, wird dieses vom Drehmomentmanager 23 als Hinweis darauf gedeutet, dass in Kürze ein positiver Momentenwunsch zu erwarten ist. Der Soll-Betriebszustand des Antriebsstrangs wird daher vorsorglich in den "Start"-Zustand versetzt.
c) der Stellung des Wählhebels:
   Wird der Wählhebel für die Gangstufe oder die Getriebeübersetzung durch den Fahrer aus der Neutral-Stellung bewegt, wechselt der Soll-Betriebszustand des Antriebsstrangs in den "Start"-Zustand.
d) dem Unterdruck im Bremskraftverstärker:
   Unterschreitet der Unterdruck im Bremskraftverstärker einen vorgegebenen Schwellwert, wechselt der Soll-Betriebszustand des Antriebsstrangs in den "Start"-Zustand, um die Funktion des Bremskraftverstärkers weiterhin zu gewährleisten. Alternativ zur unmittelbaren Auswertung des Unterdrucks im Bremskraftverstärker können auch die Anzahl und/oder Dauer von Bremspedalbetätigungen ausgewertet werden. Überschreitet die Gesamtbremsdauer dabei einen vorgegebenen Schwellwert, wird der Soll-Betriebszustand ebenfalls in den "Start"-Zustand - versetzt.
e) dem Ladezustand des Energiespeichers:
   Unterschreitet der Ladezustand des Energiespeichers 4 einen vorgegebenen Schwellwert, wechselt der Soll-Betriebszustand des Antriebsstrangs in den "Start"-Zustand, um sicher zu stellen, dass der Energiespeicher 4 noch ausreichend elektrische Energie für den nächsten Startvorgang zur Verfügung stellen kann und wieder geladen wird.
f) dem Ladezustand des Energiespeichers und der Topologie der Fahrstrecke:
   Überschreitet der Ladezustand des Energiespeichers 4 einen vorgegebenen Schwellwert und wird von der Fahrer- und Situationserkennung eine Gefällstrecke erkannt, wird der Soll-Betriebszustand ebenfalls in den "Start"-Zustand versetzt, um die Bremswirkung des Verbrennungsmotors 1 zu nutzen.

Analog zu den beschriebenen Übergangsbedingungen für einen Zustandswechsel von "Erweitertes Segeln" zu "Start" werden für jeden möglichen Zustandswechsel Übergangsbedingungen in Abhängigkeit von den Eingangssignalen des Zustandsmanagers 22 definiert. So wird beispielsweise ein Wechsel in den "Boost"-Betrieb abhängig sein vom aktuellen Momentenwunsch, vom Fahrertyp, vom Ladezustand des Energiespeichers und eventuell von der Drehzahl. Ein Wechsel vom Zustand "Einstieg" zum Zustand "Start" wird wegen der Leistung des integrierten Startergenerators 3 nur dann zulässig sein, wenn die Kupplung 6 geöffnet ist, der Verbrennungsmotor 1 abgeschaltet ist und das Bremspedal 16 betätigt ist. Auch kann durch geeignete Wahl der Übergangsbedingungen festgelegt werden, dass der Antriebsstrang nach jedem Startvorgang zunächst in den Batterieladezustand Z52 wechselt, um ein Aufladen des Energiespeichers 4 zu gewährleisten. Durch einfache Erweiterungen der Übergangsbedingung kann ein Wechsel in diesen Zustand aber verhindert werden, falls der Energiespeicher 4 bereits ausreichend geladen ist oder falls eine sehr hohe oder keine Momentenanforderung durch den Fahrer besteht. In diesen Fällen kann stattdessen in den "Boost"-Betrieb gewechselt beziehungsweise im "Segel"-Betrieb verblieben werden.

Die beschriebenen Übergangsbedingungen sind lediglich beispielhaft zu sehen, zeigen aber deutlich die einfache und vielfältige Konfigurierbarkeit der erfindungsgemäßen Antriebsstrangsteuerung.

Aus Sicherheitsgründen ist es sinnvoll, im Zustandsmanager 22 auch einen Zustand "Notfahrprogramm" vorzusehen. Ein Wechsel in diesen Zustand wird immer dann veranlasst, wenn eine Fehlfunktion im Antriebsstrang erkannt wird. Das Fahrzeug kann dann beispielsweise kontrolliert bis zum Stillstand abgebremst werden und anschließend kann der Verbrennungsmotor 1 abgeschaltet werden.

Die Erfindung wurde beispielhaft für ein Kraftfahrzeug mit zwei Antriebsaggregaten in Form einer Brennkraftmaschine und eines integrierten Startergenerators dargestellt. Der integrierte Startergenerator, der einerseits die Funktion eines Anlassers mit nachgeschaltetem Getriebe und andererseits die Funktion einer davon gesonderten Lichtmaschine zur Ladung der Fahrzeugbatterie übernimmt, ist dabei lediglich als Sonderform eines Elektromotors anzusehen. Der Einsatz der Erfindung ist aber durch die Art der Antriebsaggregate in keiner Weise eingeschränkt. Ebenso ist die Erfindung auch für Kraftfahrzeuge mit mehr als zwei Antriebsaggregaten anwendbar.

## Patentansprüche

1. Antriebsstrangsteuerung für ein Kraftfahrzeug mit mindestens zwei Antriebsaggregaten (1, 3) und einem Getriebe (7), die aufweist
- dezentrale Steuereinheiten (2, 5, 8) zum Erzeugen Von Stellsignalen für die Antriebsaggregate (1, 3) und das Getriebe (7),
- eine Pedalinterpretation (20) zum Ermitteln eines Drehmoment-Sollwerts aus einer den Fahrerwunsch charakterisierenden Größe
**gekennzeichnet durch**
- einen Zustandsmanager (22) zum Festlegen eines Soll-Betriebszustandes des Antriebsstrangs abhängig von dem Drehmoment-Sollwert und vom Ladezustand eines Energiespeichers (4) und
- einen Drehmomentmanager (23) zum Erzeugen von Steuersignalen für die dezentralen Steuereinheiten (2, 5, 8) abhängig von dem Drehmoment-Sollwert und vom festgelegten Soll-Betriebszustand des Antriebsstrangs.

2. Antriebsstrangsteuerung nach Anspruch 1, **gekennzeichnet durch** eine Fahrer- und Situationserkennung (21) zum Auswerten und Klassifizieren von Betriebsgrößen des Fahrzeugs, wobei der Soll-Betriebszustand des Antriebsstrangs vom Zustandsmanager (22) auch abhängig von den Ausgangssignalen der Fahrer- und Situationserkennung (21) festgelegt wird.

3. Antriebsstrangsteuerung nach einem der Ansprüche 1 oder 2, **dadurch gekennzeichnet, dass** der Zustandsmanager (22) einen Konfigurationskenner aufweist und im Zustandsmanager (22) gespeicherte Soll-Betriebszustände des Antriebsstrangs abhängig von diesem Konfigurationskenner gesperrt oder freigegeben werden.

4. Antriebsstrangssteuerung nach einem der vorhergehenden Ansprüche, **dadurch gekennzeichnet, dass** zumindest eines der Antriebsaggregate (1, 3) als Brennkraftmaschine (1) und zumindest eines der Antriebsaggregate als Elektromotor (3) ausgebildet ist.

5. Antriebsstrangssteuerung nach Anspruch 4, **dadurch gekennzeichnet, dass** im Zustandsmanager (22) ein Soll-Betriebszustand "Start"' (Z2) gespeichert ist, in dem der Verbrennungsmotor (1) gestartet wird.

6. Antriebsstrangssteuerung nach Anspruch 4 oder 5, **dadurch gekennzeichnet, dass** im Zustandsmanager (22) ein Soll-Betriebszustand "Segeln" (Z3) gespeichert ist, in dem eine Kupplung (6) im Antriebsstrang geöffnet wird.

7. Antriebsstrangssteuerung nach Anspruch 6, **dadurch gekennzeichnet, dass** im Zustandsmanager (22) ein Soll-Betriebszustand " Erweitertes Segeln" (Z4) gespeichert ist, in dem der Verbrennungsmotor (1) abgeschaltet wird.

8. Antriebsstrangssteuerung nach den Ansprüchen 5 und 7, **dadurch gekennzeichnet, dass** der Zustandsmanager (22) einen Wechsel vom Soll-Betriebszustand "Erweitertes Segeln" (Z4) in den Soll-Betriebszustand "Start" (Z2) veranlasst, wenn das Fahrpedal (15) betätigt wird.

9. Antriebsstrangssteuerung nach den Ansprüchen 5 und 7, **dadurch gekennzeichnet, dass** der Zustandsmanager (22) einen Wechsel vom Soll-Betriebszustand "Erweitertes Segeln" (Z4) in den Soll-Betriebszustand "Start" (Z2) veranlasst, wenn das Bremspedal (16) nicht mehr betätigt wird.

10. Antriebsstrangssteuerung nach den Ansprüchen 5 und 7, **dadurch gekennzeichnet, dass** der Zustandsmanager (22) einen Wechsel vom Soll-Betriebszustand "Erweitertes Segeln" (Z4) in den Soll-Betriebszustand "Start" (Z2) veranlasst, wenn ein Wählhebel für die Gangstufe oder die Getriebeübersetzung aus einer Neutral-Stellung heraus bewegt wird.

11. Antriebsstrangssteuerung nach den Ansprüchen 5 und 7, **dadurch gekennzeichnet, dass** der Zustandsmanager (22) einen Wechsel vom Soll-Betriebszustand "Erweitertes Segeln" (Z4) in den Soll-Betriebszustand "Start" (Z2) veranlasst, wenn der Ladezustand des Energiespeichers (4) einen vorgegebenen Schwellwert unterschreitet.

12. Antriebsstrangssteuerung nach den Ansprüchen 5 und 7, **dadurch gekennzeichnet, dass** der Zustandsmanager (22) abhängig vom Ladezustand des Energiespeichers (4) und von der Topologie der Fahrstrecke einen Wechsel vom Soll-Betriebszustand "Erweitertes Segeln" (Z4) in den Soll-Betriebszustand "Start" (Z2) veranlasst.

## Claims

1. Drivetrain controller for a motor vehicle with at least two drive units (1, 3) and a gearbox (7), comprising
- decentralised control units (2, 5, 8) for generating the setting signals for the drive units (1, 3) and the gearbox (7).
- a pedal interpretation unit (20) for determining a torque set value from a parameter characterising the driver's command
**characterised by**
- a status manager (22) for specifying a set operating state for the drivetrain as a function of the torque set value and the charge state of an energy store (4) and
- a torque manager (23) for generating control signals for the decentralised control units (2, 5, 8) as a function of the torque set value and the specified set operating state for the drivetrain.

2. Drivetrain controller according to claim 1, **characterised by** a driver and situation recognition unit (21) for evaluating and classifying operating parameters of the vehicle, the set operating state of the drivetrain being specified by the status manager (22) also as a function of the output signals of the driver and situation recognition unit (21).

3. Drivetrain controller according to one of the claims 1 or 2, **characterised in that** the status manager (22) includes a configuration recogniser and set operating states of the drivetrain that are stored in the status manager (22) are inhibited or released depending on this configuration recogniser.

4. Drivetrain controller according to one of the preceding claims, **characterised in that** at least one of the drive units (1, 3) is implemented as an internal combustion engine (1) and at least one of the drive units is implemented as an electric motor (3).

5. Drivetrain controller according to claim 4, **characterised in that** a set operating state "start" (Z2) is stored in the status manager (22) and the combustion engine (1) is started in this state.

6. Drivetrain controller according to claim 4 or 5, **characterised in that** a set operating state "freewheeling" (Z3) is stored in the status manager (22) and a clutch (6) in the drivetrain is opened in this state.

7. Drivetrain controller according to claim 6, **characterised in that** a set operating state "extended freewheeling" (Z4) is stored in the status manager (22) and the combustion engine (1) is switched off in this state.

8. Drivetrain controller according to claims 5 and 7, **characterised in that** the status manager (22) initiates a switch from the set operating state "extended freewheeling" (Z4) to the set operating state "start" (Z2) when the accelerator pedal (15) is depressed.

9. Drivetrain controller according to claims 5 and 7, **characterised in that** the status manager (22) initiates a switch from the set operating state "extended freewheeling" (Z4) to the set operating state "start" (Z2) when the brake pedal (16) is no longer depressed.

10. Drivetrain controller according to claims 5 and 7, **characterised in that** the status manager (22) initiates a switch from the set operating state "extended freewheeling" (Z4) to the set operating state "start" (Z2) when a selector lever for the gear stage or the gearbox transmission ratio is moved from a neutral position.

11. Drivetrain controller according to claims 5 and 7, **characterised in that** the status manager (22) initiates a switch from the set operating state "extended freewheeling" (Z4) to the set operating state "start" (Z2) when the charge state of the energy store (4) falls below a predefined threshold value.

12. Drivetrain controller according to claims 5 and 7, **characterised in that** the status manager (22) initiates a switch from the set operating state "extended freewheeling" (Z4) to the set operating state "start" (Z2) depending on the charge state of the energy store (4) and the topology of the route travelled.

## Revendications

1. Commande de branche d'entraînement pour un véhicule automobile comprenant au moins deux ensembles d'entraînement (1, 3) et une boîte de vitesses (7), qui présente
- des unités de commande (2, 5, 8) décentralisées pour générer des signaux de réglage pour les ensembles d'entraînement (1, 3) et la boîte de vitesses (7),
- une interprétation de pédale (20) pour déterminer une valeur de consigne de couple à partir d'une grandeur caractérisant le souhait du conducteur,
**caractérisée par**
- un gestionnaire d'état (22) pour définir un état de service théorique de la branche d'entraînement en fonction de la valeur théorique du couple et de l'état de charge d'un accumulateur d'énergie (4) et
- un gestionnaire de couple (23) pour générer des signaux de commande pour les unités de commande (2, 5, 8) décentralisées en fonction de la valeur théorique de couple et de l'état de service théorique défini de la branche d'entraînement.

2. Commande de branche d'entraînement selon la revendication 1, **caractérisée par** une identification du conducteur et de la situation (21) pour l'analyse et la classification de grandeur de service de véhicule, l'état de service théorique de la branche d'entraînement étant défini par le gestionnaire d'état (22) également en fonction des signaux de sortie de l'identification du conducteur et de la situation (21).

3. Commande de branche d'entraînement selon l'une des revendications 1 ou 2, **caractérisée en ce que** le gestionnaire d'état (22) présente un identificateur de configuration, et des états de service théoriques, stockés dans le gestionnaire d'état (22), de la branche d'entraînement sont bloquées ou autorisées en fonction de cet identificateur de configuration.

4. Commande de branche d'entraînement selon l'une quelconque des revendications précédentes, **caractérisée en ce qu'**au moins l'un des ensembles d'entraînement (1, 3) est conçu comme moteur à combustion interne (1) et au moins l'un des ensembles d'entraînement comme moteur électrique (3).

5. Commande de branche d'entraînement selon la revendication 4, **caractérisée en ce que** dans le gestionnaire d'état (22) est mémorisé un état de service théorique "démarrage" (Z2), dans lequel le moteur à combustion (1) est démarré.

6. Commande de branche d'entraînement selon la revendication 4 ou 5, **caractérisée en ce que** dans le gestionnaire d'état (22) est mémorisé un état de service théorique "navigation" (Z3), dans lequel un embrayage (6) est ouvert dans la branche d'entraînement.

7. Commande de branche d'entraînement selon la revendication 6, **caractérisée en ce que** dans le gestionnaire d'état est mémorisé un état de service théorique "navigation élargie" (Z4), dans lequel le moteur à combustion interne (1) est déconnecté.

8. Commande de branche d'entraînement selon les revendications 5 et 7, **caractérisée en ce que** le gestionnaire d'état (22) demande un changement de l'état de service théorique "navigation élargie" (Z4) à l'état de service théorique "démarrage" (Z2) lorsque la pédale d'accélérateur (15) est actionnée.

9. Commande de branche d'entraînement selon les revendications 5 et 7, **caractérisée en ce que** le gestionnaire d'état (22) demande un changement de l'état de service théorique "navigation élargie" (Z4) à l'état de service théorique "démarrage" (Z2) lorsque la pédale de frein (16) n'est plus actionnée.

10. Commande de branche d'entraînement selon les revendications 5 et 7, **caractérisée en ce que** le gestionnaire d'état (22) demande un passage de l'état de service théorique "navigation élargie" (Z4) à l'état de service théorique "démarrage" (Z2) lorsqu'un levier sélecteur est déplacé à partir d'une position neutre pour le rapport ou la transmission de la boîte de vitesses.

11. Commande de branche d'entraînement selon les revendications 5 et 7, **caractérisée en ce que** le gestionnaire d'état (22) demande un changement de l'état de service théorique "navigation élargie" (Z4) à l'état de service théorique "démarrage" (Z2) lorsque l'état de charge de l'accumulateur d'énergie (4) passe au-dessous d'une valeur seuil prédéfinie.

12. Commande de branche d'entraînement selon les revendications 5 et 7, **caractérisée en ce que** le gestionnaire d'état (22) demande en fonction de l'état de charge de l'accumulateur d'énergie (4) et de la topologie du tronçon un passage de l'état de service théorique "navigation élargie" (Z4) à l'état de service théorique "démarrage" (Z2).
